# EUROPEAN PATENT SPECIFICATION

(11) **EP 0 524 933 B1**
(45) Date of publication and mention of the grant of the patent: **23.08.1995**
(21) Application number: 91903802.6
(22) Date of filing: 19.02.1991
(51) Int. Cl.: B09B 3/00, F23G 7/04

(54) **METHODS FOR NEUTRALIZING DYESTUFF-SLUDGES AND WASTE PRODUCTS**
VERFAHREN ZUM NEUTRALISIEREN VON FARBSTOFFSCHLÄMMEN UND ABFALLPRODUKTEN
PROCEDE DE NEUTRALISATION DES BOUES ET EFFLUENTS DE TEINTURE

(43) Date of publication of application: 03.02.1993
(73) Proprietor: MAGAR ASVANYOLAJ ES FOLDGAZ KISERLETI INTEZET, H-8201 Veszprem (HU); Ikarus Karosszéria és Jármügyar, H-1631 Budapest (HU)
(72) Inventor: SZOKE, Elek, H-1163 Budapest (HU); LACSNY, Bálint, H-1165 Budapest (HU); WAGNER, Jozsef, H-1148 Budapest (HU); MOZES, Gyula, H-8200 Veszprém (HU); BALOGH, András, H-8200 Veszprém (HU); SCHMID, Ferenc, H-8200 Veszprém (HU); DOBOS, Gábor, H-8420 Zirc (HU); MOLNAR, Béla, H-8200 Veszprém (HU); MOLNAR, Mihályné, H-8200 Veszprém (HU)
(74) Representative: Schwabe - Sandmair - Marx
(86) International application number: HU9100009
(87) International publication number: WO9214562

(56) References cited:
- DE-A- 2 645 658
- DE-A- 3 307 737
- US-A- 4 052 265

## Description

The invention relates to a method of neutralization of dyestuff-sludges and/or waste products containing comminutable organic components, mainly resins, as given and defined in the claims.

Specification of technological solutions relating to the transformation of dyestuff-sludges and other wastes occupies internationally an ever increasing field.

Technological solutions generally used are utmost different, as it becomes obvious from the comprehensive technical literature of the authors Olesák-Szabó with the title "Energy gained from waste" /published by the Technical Publishers, Budapest, 1984/, as well as from the lecture hold by Dr. Walmüller "Thermic neutralization of wastes and /harmful/ wastes" on the occasion of the Austro-Hungarian Meeting on Ecology in 1987/.

Cited technical literatures present a variety of technological specifications and solutions for the recovery and neutralization of diverse waste types.

The Patent Specification CH-PS 658 449 relates to the drying of wet sludges; the essence of the drying method lies in that materials having been evaporated are utilized for energetic purposes. Wet sludge containing combustible materials is oxidized under pressure and at a high temperature.

DE-A-3307737 discloses a pyrolysis method for removing dyestuff waste. The caky solid phase obtained is deposited whereas the gaseous products are burnt with no specific removal of air polluting contaminants.

### DISCLOSURE OF INVENTION

The object of the present invention is to provide a complex technological solution, wherein in a closed system oxidizing conversion of dyestuff-sludges and different wastes is taking place, simultaneously arising atmospheric contaminations are removed, at the same time residues of combustion are processed resp. neutralized in a closed system to obtain a solid phase which is suitable for manufacturing dyestuff.

In accordance with the invention we proceed so, in so far as in the processing plant neutralization of the dyestuff-sludges arriving in a closed unit and/or of the waste containing comminutable organic components, mainly resins, is taking place after drying and pre-treatment by pyrolysis, in a system with movable or fixed beds at a temperature in the range between 300 and 800 C°; in course of pyrolysis dwelling time dyestuff-sludges and/or wastes containing comminutable organic components, in particular resins, amounts to 20 to 50 seconds; quantity of the medium with an oxygen content of 21 % used for pyrolysis amounts to 3 to 5 m³ related to one kg of the solid substance; after having performed pyrolysis we obtain a gaseous and a solid waste to be separated; the solid phase is recycled to the process of dyestuff-manufacturing, while the gaseous phase is led directly through a reactor working with the thermic or catalytic method of oxidation or the combination thereof; thereafter it is led into the atmosphere, provided the gaseous phase is free of contaminants, i.e. not harmful; in case, if the gaseous phase contained substances being harmful for the environment, these are removed in an absorbent wash-system or in an adsorbent column; gaseous media left back after recovery are led through a reactor using the thermic or catalytic method of oxidization or the combination thereof, thereafter they are led into the atmosphere.

Pyrolysis may be performed in a fluidization system with a mobile bed using a carrier medium wherein sand grains or ceramic grains with a grain diameter of 0,1 to 5 mm, glass-grains or catalytically active metal oxide grains used to be applied as heat-carrier media.

Pyrolysis is preferably taking place in a system with movable beds, wherein the pyrolysing bed performs a rotary or horizontal motion; in dependence of requirements of pyrolysis bed temperature may be changed in the range between 300 and 800 C°.

Pyrolysis may be realized in a system with a fixed bed and a grate too, wherefrom solid product of combustion formed as a final product is forwarded continuously by means of a conveyor chain or it can be removed periodically by putting the combustion grate into motion. Flue gases and solid substances arising in course of pyrolysis in fluidizing or mobile beds preferable used to be separated into gaseous and solid substance by means of separators based on the cyclon system or by precipitation.

Gaseous phases are introduced advantageously into an absorbent wash-system, in which contaminating hydrocarbons over C₄, primarily aliphatics and aromatics with large carbon chains are separated, using a wash-fluid oil or hydrocarbons with low tension, so e.g. fuel oils, ethylene glycol, glycerine, softeneres; in course of recirculation temperature of the absorbent medium is kept in the range between 20 and 40 C° in a separate heating and cooling system.

Parts of the gaseous phase are bound preferably in an adsorption column, mostly on active carbon or silica gel or aluminium oxide; in dependence of the length of the carbon chain, temperature lies in the range between 20 and 40 C°, flow velocity amounts to 0,2 -0,5 m³/sec; regeneration of adsorbents used to be performed either thermically, maximally up to 300 C° or by introducing steam, in the latter case water and solid phase are separated in a separator.

Particles of the gaseous phase or flue gases leaving the absorbent or adsorbent equipments are oxidized preferably thermically or catalytically, in course of the catalytic combustion temperature in the reactor lies in the range between 250 and 450 C°.

### MODES FOR CARRYING OUT THE INVENTION

### Examples of application:

### Example 1

45 kg dyestuff-sludge or any other equivalent material with identical carbon content are oxidized with air of the quantity of 211 kg/h in a fluidization pyrolysing system, wherefrom 16 kg/h solid residue and 240 kg/h flue gases are leaving. Flue gases and dusty materials are cleaned from solid substance in a cyclon with a 95 % efficiency, that means that 15 kg/h solid substance will be further processed. 1 kg/h solid material contained in the flue gas and 240 kg/h gas get rid of the dusty content in a dry cyclon or in an electrofilter, while dusty component will be introduced into the solid material for subsequent processing.

240 kg/h flue gases - consisting of 211 kg/h gas mixture with changing oxigen content and 29 kg/h decomposition products - are led into an oily washer, wherein contaminations are separated with a 75 % efficiency at least. Gas mixture leaving the oily wash system and containing 7,25 kg/h decomposition products is led into the catalytic combustion system coupled to the direct burning-in kiln, wherein - by adding supplementary air resp. oxigen in case of necessity - contaminating components are transformed with a 98 % efficiency. Practically, gases leaving the catalytic reactor do not contain hydrocarbon contaminations.

### Example 2

45 kg/h dyestuff-sludge or equivalent waste with identical carbon content and 211 kg/h air are led into a discontinuously or continuously operated mechanic pyrolysing equipment /with a rotary drum, movable and immovable bed/, wherein organic substances are transformed by oxidizing pyrolysis and after having separated solid substance and flue gases further processing may take place. In course of subsequent mechanic purification of the flue gases solid substances appearing as fly dust are separated, thereafter flue gases in a total quantity of 240 kg/h - consisting of 211 kg/h gas with changing oxigen content and 29 kg/h decomposition product - are led into the oily washer, wherein contaminants are flushed with 75 % efficiency. Gaseous substances leaving the wash-system containing 7,2 kg/h decomposition product get rid of organic contaminants in the catalytic after-combustion system with the direct burning-in kiln with an efficiency over 98 %.

### Example 3

We proceed as described in Example 1 and 2 with the difference that instead of the oily wash-system flue gases are led through an absorber filled with active carbon, aluminium oxide or silica gel or artificial and natural zeolites, wherein decomposition products are bound with an efficiency of at least 80 %; gaseous substances leaving the absorber are transformed in the catalytic after-combustion equipment with the direct burning-in kiln.

Periodical regeneration of the absorber is taking place with a warm inert or oxigen-containing gas, in dependence of the filler at a temperature in the range between 200 and 300 C°, with direct or indirect heating.

In course of regeneration the air leaving the adsorber is led into the catalytic combustion system combined with the burning-in kiln, wherein these are transformed into components being unharmful for the enviroment.

The main advantage of the method according to the invention lies in that materials containing dyestuff-sludge and other combustible components can be utilized as raw materials, by converting the residues by oxidizing pyrolysis new products, product groups may be obtained /so e.g. priming compositions, fillers/, simultaneously in a closed cycle materials being harmful in respect to ecology can be utilized.

## Claims

1. Method for neutralizing dyestuff-sludges and/or waste products containing comminutable organic components, mainly resins, via pyrolysis the obtained solid phase being recycled to manufacturing dyestuff **characterized** in that the neutralization is performed by oxidizing pyrolysis in a system with mobile or fixed beds at a temperature of 300 to 800 C°, in course of pyrolysis dwelling time of dyestuff-sludges and/or waste containing comminutable organic components, mainly resin, amounts to 20 to 50 sec, the amount of the medium used for pyrolysis containing 21 % oxygen reaches 3 to 5 m³ pro kg solid substance, after having performed pyrolysis we obtain a waste with gaseous phase and solid phase, which are separated in a way known in itself, solid phase is recycled to the process of dyestuff-manufacturing, while the gaseous phase is led directly through a reactor working with a method of thermic or catalytic oxidation or with a combination thereof, thereafter it is led into the atmosphere provided the gaseous phase is free of contaminants, i.e. not harmful, or substances being harmful for the environment are recovered in an absorbent wash-system or in an adsorbent column, following recovery gaseous media left behind are led through a reactor using a method of thermic or catalytic oxidation or the combination thereof, wherefrom they are led into the atmosphere.

2. Method as claimed in claim 1, **characterized** in that pyrolysis is realized in a fluidization system with mobile bed using a carrier medium, while as heat carrier medium sand grains with a grain diameter of 0,1 - 5 mm, ceramic grains, glass-grains or catalytically active metal oxide grains are used.

3. Method as claimed in claim 1, **characterized** in that pyrolysis is taking place in a system with mobile bed, wherein pyrolysing bed performs a rotary or horizontal motion, while the temperature of the bed in dependence of requirements of pyrolysis lies in the range between 300 and 800 C°.

4. Method as claimed in claim 1, **characterized** in that pyrolysis is taking place in a system with fixed bed and a grate, wherefrom solid combustion product formed as a final product is forwarded continuously by means of a conveyor chain or it is removed discontinuously by putting the combustion grate into motion.

5. Method as claimed in claim 1, **characterized** in that flue gases and solid substances arising after fluidization or pyrolysis in the mobile bed used to be separated into gas and solid substance in a cyclon or by means of precipitation.

6. Method as claimed in claim 1, **characterized** in that gaseous components are led into an adsorbent wash-system, wherein contaminant hydrocarbons higher, than C₄, in particular aliphatics and aromatics with longer carbon chains are separated, as wash-liquid oil or hydrocarbons with low tension using, so e.g. fuel oil, ethylene glycol, glycerine, softener, in course of recirculation temperature of the absorption medium is kept in the range between 20 and 40 C° in a cooling or heating system.

7. Method as claimed in claim 1, **characterized** in that gaseous components are bound in an adsorbent column, most frequently on active carbon, silica gel or aluminium oxide, in dependence of the length of the carbon chain, temperature lies in the range between 20 to 40 C°, flow velocity amounts to 0,2 - 0,5 m³/sec, regeneration of adsorbents is realized thermically up to max. 300 C° or by introducing steam, in the latter case water and organic phase are separated in a separator.

8. Method as claimed in claim 1, **characterized** in that flue gases leaving the absorption resp. adsorption systems are oxidized by using thermic or catalytic method or the combination thereof, in course of catalytic combustion, temperature of the reactor lies in the range between 250 and 450 C°.

## Patentansprüche

1. Verfahren zum Neutralisieren von Farbstoffaufschlämmungen und/oder von zerkleinerbare organische Bestandteile, hauptsächlich Harze, enthaltenden Abfallprodukten mittels Pyrolyse, wobei die erhaltene feste Phase zur Herstellung von Farbstoffen wiedergewonnen wird und das Verfahren dadurch gekennzeichnet ist, daß die Neutralisation über die oxidierende Pyrolyse in einem System mit mobilen Betten oder Festbetten bei einer Temperatur von 300 bis 800 °C durchgeführt wird, daß im Verlauf der Pyrolyse die Verweilzeit der Farbstoffaufschlämmung und/oder der zerkleinerbare, organische Bestandteile, hauptsächlich Harze, enthaltenden Abfälle 20 bis 50 Sekunden beträgt, daß die Menge des 21 % Sauerstoff enthaltenden, zur Pyrolyse eingesetzten Mediums 3 bis 5 m³ pro kg Feststoff beträgt und daß nach der Pyrolyse ein Abfallprodukt aus einer Gas- und einer festen Phase erhalten wird, die auf bekannte Weise voneinander getrennt werden, wobei die feste Phase zum Farbstoffherstellungsprozeß zurückgeführt wird, während die Gasphase direkt durch einen mit einem Verfahren der thermischen oder katalytischen Oxidation oder einer Kombination beider arbeitenden Reaktor geführt und anschließend in die Atmosphäre entlassen wird, vorausgesetzt, die Gasphase ist frei von Verunreinigungen, d.h. unschädlich, oder bei umweltschädlichen Stoffe in einem Absorptionswaschsystem oder einer Adsorptionssäule wiedergewonnen und nach der Wiedergewinnung die zurückbleibenden gasförmigen Medien durch einen mit thermischer oder katalytischer Oxidation oder einer Kombination beider arbeitenden Reaktor geführt werden, von wo aus sie in die Atmosphäre abgegeben werden.

2. Verfahren gemäß Anspruch 1, dadurch gekennzeichnet, daß die Pyrolyse in einem Fluidisierungssystem mit einem mobilen Bett unter Verwendung eines Trägermediums ausgeführt wird, während als Wärmeträger Sandkörner mit einem Korndurchmesser von 0,1 bis 5 mm, Keramik- oder Glaskörner oder Körner aus einem katalytisch aktiven Metalloxid verwendet werden.

3. Verfahren gemäß Anspruch 1, dadurch gekennzeichnet, daß die Pyrolyse in einem System mit einem mobilen Bett abläuft, wobei das Pyrolysebett Dreh- oder horizontale Bewegungen ausführt und die Betttemperatur in Abhängigkeit von den Pyrolyseerfordernissen im Bereich zwischen 300 und 800 °C liegt.

4. Verfahren gemäß Anspruch 1, dadurch gekennzeichnet, daß die Pyrolyse in einem System mit einem Festbett und einem Rost abläuft, von dem das als Endprodukt gebildete feste Verbrennungsprodukt mittels einer Förderkette kontinuierlich abtransportiert oder durch Bewegung des Rostes diskontinuierlich entfernt wird.

5. Verfahren gemäß anspruch 1, dadurch gekennzeichnet, daß die nach der Fluidisierung oder Pyrolyse entstehenden Abgase und Feststoffe in einem Zyklon oder durch Niederschlagsbildung in Gas und Feststoff aufgetrennt werden.

6. Verfahren gemäß Anspruch 1, dadurch gekennzeichnet, daß die gasförmigen Bestandteile in ein Adsorptionswaschsystem eingeleitet werden, in dem die verunreinigenden Kohlenwasserstoffe mit mehr als C₄, insbesondere Aliphaten und Aromaten mit längeren Kohlenwasserstoffketten unter Verwendung eines flüssigen Waschöls oder eines Kohlenwasserstoffs mit niedriger Spannung wie Heizöl, Ethylenglykol, Glycerin und einem Weichmacher abgetrennt werden, wobei im Verlauf der Rezirkulation die Temperatur des Absorptionsmediums in einem Kühl- oder Heizsystem im Bereich von 20 bis 40 °C gehalten wird.

7. Verfahren gemäß Anspruch 1, dadurch gekennzeichnet, daß die gasförmigen Bestandteile in Abhängigkeit von der Länge der Kohlenstoffketten in einer Adsorptionssäule, in den meisten Fällen Aktivkohle, Silicagel oder Aluminiumoxid, gebunden werden, wobei die Temperatur im Bereich von 20 bis 40 °C liegt, die Fließgeschwindigkeit zwischen 0,2 und 0,5 m³/sec beträgt und die Regeneration des Adsorbens thermisch bis zu maximal 300 °C oder durch Einleiten von Dampf erfolgt, wobei im letzteren Fall das Wasser und die organische Phase in einem Abscheider voneinander getrennt werden.

8. Verfahren gemäß Anspruch 1, dadurch gekennzeichnet, daß die das Ab- bzw. Adsorptionssystem verlassenden Abgase unter Einsatz eines thermischen oder katalytoschen Verfahrens oder einer Kombination aus beiden oxidiert werden, wobei die Temperatur des Reaktors im Bereich von 250 bis 450 °C liegt.

## Revendications

1. Procédé de neutralisation de boues de colorants et/ou de résidus contenant des composants organiques pulvérisables, principalement des résines, par pyrolyse, la phase solide obtenue étant recyclée à la fabrication des colorants, caractérisé en ce qu'on effectue la neutralisation par pyrolyse oxydante dans un système à lits mobiles ou fixes, à une température de 300 à 800°C, le temps de séjour des boues de colorants et/ou des résidus contenant des composants organiques pulvérisables, principalement des résines, pendant la pyrolyse, est de 20 à 50 s, la quantité de milieu utilisé pour la pyrolyse contenant 21% d'oxygène atteint 3 à 5 m³ par kg de substance solide, après avoir effectué la pyrolyse on obtient un résidu avec une phase gazeuse et une phase solide, qui sont séparées d'une manière connue en elle-même, la phase solide est recyclée au procédé de fabrication de colorants, tandis que la phase gazeuse est directement envoyée dans un réacteur fonctionnant selon un procédé d'oxydation thermique ou catalytique ou d'une combinaison de ceux-ci, après quoi elle est envoyée dans l'atmosphère, sous réserve que la phase gazeuse soit dépourvue d'impuretés, c'est-à-dire qu'elle soit non-nocive, ou des substances nocives pour l'environnement sont récupérées dans un système de lavage adsorbant ou dans une colonne d'adsorption à la suite de la récupération les milieux gazeux laissés sont envoyés dans un réacteur utilisant un procédé d'oxydation thermique ou catalytique ou d'une combinaison de ceux-ci, d'où ils sont envoyés dans l'atmosphère.

2. Procédé selon la revendication 1, caractérisé en ce qu'on réalise la pyrolyse dans un système de fluidification à lit mobile utilisant un milieu véhicule, alors que l'on utilise comme milieu véhiculant la chaleur, des grains de sable présentant un diamètre granulaire de 0,1 à 5 mm, des grains de céramique, des grains de verre ou des grains d'oxyde métallique catalytiquement actif.

3. Procédé selon la revendication 1, caractérisé en ce que la pyrolyse a lieu dans un système à lit mobile, dans lequel le lit de pyrolyse effectue un mouvement rotatif ou horizontal, alors que la température du lit, en fonction des exigences de la pyrolyse, se situe dans l'intervalle allant de 300 à 800°C.

4. Procédé selon la revendication 1, caractérisé en ce que la pyrolyse a lieu dans un système à lit fixe et grille, d'où est envoyé continuellement le produit de combustion solide formé comme produit final par une chaîne transporteuse ou d'où il est retiré de manière discontinue en mettant la grille de combustion en mouvement.

5. Procédé selon la revendication 1, caractérisé en ce que les gaz de combustion et les substances solides apparaissant après la fluidification ou la pyrolyse dans le lit mobile sont habituellement séparés en gaz et en substance solide dans un cyclone ou par précipitation.

6. Procédé selon la revendication 1, caractérisé en ce que les composants gazeux sont envoyés dans un système de lavage adsorbant, où sont séparées les impuretés hydrocarbonées contenant plus de 4 atomes de carbone, en particulier des composés aliphatiques et aromatiques ayant des chaînes carbonées plus longues, en utilisant comme huile ou hydrocarbures liquides de lavage de faible tension, par exemple, du mazout, de l'éthylèneglycol, de la glycérine, un agent adoucissant, la température du milieu d'absorption étant maintenue, pendant le recyclage, entre 20 et 40°C par un système de refroidissement ou de chauffage.

7. Procédé selon la revendication 1, caractérisé en ce que les constituants gazeux sont liés dans une colonne d'absorption, le plus souvent sur du carbone actif, du gel de silice ou de l'oxyde d'aluminium, en fonction de la longueur de la chaîne carbonée, la température se situe dans l'intervalle allant de 20 à 40°C, le débit varie de 0,2 à 0,5 m³/s, la régénération des adsorbants est effectuée thermiquement jusqu'à une température maximum de 300°C, ou par introduction de vapeur, dans ce dernier cas l'eau et la phase organique étant séparées dans un séparateur.

8. Procédé selon la revendication 1, caractérisé en ce que les gaz de combustion quittant les systèmes d'absorption resp. d'adsorption sont oxydés en utilisant un procédé thermique ou catalytique ou une combinaison de ceux-ci, la température du réacteur se situant, pendant la combustion catalytique, dans l'intervalle de 250 à 450°C.
